# EUROPEAN PATENT SPECIFICATION

(11) **EP 2 953 996 B1**
(45) Date of publication and mention of the grant of the patent: **24.08.2016**
(21) Application number: 14735938.4
(22) Date of filing: 02.07.2014
(51) Int. Cl.: C08J 5/00, B65D 41/00, B65D 41/04, B65D 51/00, C08L 23/06, C08L 23/08, C08L 67/00, C08L 67/04, C08J 5/18

(54) **PE-PLA COMPOSITIONS FOR CAPS AND CLOSURES**
PE-PLA-ZUSAMMENSETZUNGEN FÜR DECKEL UND VERSCHLÜSSE
COMPOSITIONS PE-PLA POUR CAPUCHONS ET FERMETURES

(30) Priority: 02.07.2013 EP 13174744
(43) Date of publication of application: 16.12.2015
(73) Proprietor: Total Research & Technology Feluy, 7181 Seneffe (BE)
(72) Inventor: STANDAERT, Alain, B - 1020 Bruxelles (BE); LUIJKX, Romain, B-7521 Chercq (BE); RIBOUR, David, F-59600 Mairieux (FR); PEREIRA, Antonio, F-02800 Travecy (FR)
(74) Representative: Raboin, Jean-Christophe
(86) International application number: PCT/EP2014/064103
(87) International publication number: WO 2015/000982

(56) References cited:
- WO-A1-2009/129597
- WO-A1-2011/004032
- WO-A1-2013/045663
- US-A1- 2009 326 152

## Description

### Field of the invention

The present invention relates to caps and closures made from a blend of polyethylene and polylactic acid, to the process for producing such caps and closures as well as to their use. The caps and closures of the invention may for example be used as screw caps for sealing bottles containing carbonated or still drinks.

### The technical problem and the prior art

The use of polymeric materials to manufacture moulded articles such as caps and closures is generally known.

Polyethylene has become one of the materials of choice in the caps and closures market. This is because polyethylene offers a good balance of mechanical properties and can easily be processed either by injection moulding or by compression moulding. Recent efforts to reduce the weight of the polyethylene caps and closures have led the industry to use high density polyethylene resins having high stress cracking resistance. However one drawback of such a resin is its poor processing such as a high injection pressure, hard injection conditions and a high melt temperature required to increase the resin fluidity for acceptable cycle time leading at the end to reduced injection throughput and poor organoleptic properties of the caps and closures produced.

There remains thus a need for producing caps and closures having an improved balance of stiffness, environmental stress crack resistance (ESCR), organoleptic and processing properties that can easily be produced by injection moulding or compression moulding or both.

It is an object of the present invention to provide a cap or a closure having a good rigidity.

It is another object of the present invention to provide a cap or a closure having good ESCR properties.

It is a further object of the present invention to provide a cap or a closure that is easily produced by injection moulding or compression moulding or both.

It is an additional object of the present invention to provide a cap or a closure having acceptable organoleptic properties.

### Brief description of the invention

It has now surprisingly been found that the above objectives can be attained either individually or in any combination by a cap or closure consisting of the specific and well-defined resin composition as defined in claim 1

Thus, the present invention provides for a cap or closure made from a resin composition consisting of at least 50 wt% of a polyethylene, based on the total weight of the resin composition, having a density of at least 940 g/cm³ and of at most 970 g/cm³ when measured following the ASTM D-1505 method at 23°C and 2 to 50 wt% of polylactic acid based on the total weight of the resin composition.

In addition, the present invention provides for a process for the production of said cap or closure, said process consisting of the steps of:
(a) blending at least 50 wt% of a polyethylene, based on the total weight of the blend, having a density of at least 0.940 g/cm³ and of at most 0.970 g/cm³ and 2 to 50 wt% of polylactic acid based on the total weight of the blend,
(b) extruding the blend,
(c) injection moulding or compression moulding the extruded blend into a cap or closure.

### Detailed description of the invention

For the purposes of the present application, the properties of the polymers and caps or closures are determined as indicated in detail in the test methods.

In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art.

### The polyethylene

For the purposes of the present application, the term "polyethylene" is used to denote ethylene homopolymer as well as ethylene copolymers. If the polyethylene is a copolymer, the comonomer can be any α-olefin i.e. any 1-alkylene comprising from 2 to 12 carbon atoms, for example, ethylene, propylene, 1-butene, and 1-hexene. The copolymer can be an alternating, periodic, random, and statistical or block copolymer. Preferably, the polyethylene used in the invention is a homopolymer or a copolymer of ethylene and butene or hexene.

The polyethylene for use in the present invention has a density of at least 0.940 g/cm³, preferably of at least 0.945 g/cm³, more preferably of at least 0.950 g/cm³, most preferably of at least 0.951 g/cm³ and a density of at most 0.970 g/cm³, preferably of at most 0.965 g/cm³, more preferably of at most 0.960 g/cm³, most preferably of at most 0.954 g/cm³ when measured following the method of standard test ASTM D-1505 at a temperature of 23°C.

In an embodiment the polyethylene has a density of from 0.940 to 0.970 g/cm³, preferably of from 0.945 to 0.965 g/cm³, more preferably of from 0.950 to 0.960 g/cm³, most preferably of from 0.951 to 0.954 g/cm³.

Preferably, the polyethylene for use in the invention has a melt index (MI₂), measured at 190°C under a 2.16 kg load according to ASTM D-1238 of from 0.5 to 50 g/10 min, preferably from 1 to 10 g/10min, more preferably from 1.5 to 8 g/10min, most preferably from 2 to 4 g/10min.

Preferably, the polyethylene for use in the invention has a molecular weight distribution (MWD), which is the ratio of the weight average molecular weight Mw to the number average molecular weight Mn, of at least 3.5, more preferably at least 4 and a MWD of at most 15, preferably at most 6, more preferably at most 5.5.

In an embodiment, the polyethylene has a MWD of from 3.5 to 15, preferably of from 4 to 6.

The polyethylene can be produced from using any catalyst known in the art, such as chromium catalysts, Ziegler-Natta catalysts and metallocene catalysts.

Preferably, polyethylene is formed using a metallocene catalyst. Suitable metallocene catalysts for ethylene polymerisation include, by way of example, ethylene bis(tetrahydroindenyl) zirconium dichloride, ethylene bis(tetrahydroindenyl) zirconium difluoride, ethylene bis(indenyl) zirconium dichloride, bis(n-butylcyclopentadienyl) zirconium dichloride and mixtures thereof. Preferably the metallocene is ethylene bis(tetrahydroindenyl) zirconium dichloride or ethylene bis(tetrahydroindenyl) zirconium difluoride, more preferably the metallocene is ethylene bis(tetrahydroindenyl) zirconium dichloride.

The polyethylene may be monomodal or multimodal. Preferably the polyethylene is multimodal, more preferably bimodal.

The polyethylene may be produced by gas, slurry or solution phase process in one or several reactors connected to each other in series. Preferably the polyethylene is produced by a slurry polymerization process in several double loop reactors, preferably in two double loop reactors.

The polymerisation temperature ranges from 20 to 125 °C, preferably from 55 to 105°C, more preferably from 60 to 100°C and most preferably from 65 to 98°C and the pressure ranges from 0.1 to 10 MPa, preferably from 1 to 6 MPa, more preferably from 2 to 4.5 MPa, for a time ranging from 10 minutes to 6 hours, preferably from 1 to 3 hours, most preferably from 1 to 2.5 hours.

The polyethylene resin of the present invention may contain additives, in particular additives suitable for injection and compression moulding, such as, by way of example, processing aids, mould-release agents, slip agents, primary and secondary antioxidants, light stabilizers, anti-UV agents, acid scavengers, flame retardants, fillers, nanocomposites, lubricants, antistatic additives, nucleating/clarifying agents, antibacterial agents, plastisizers, colorants/pigments/dyes and mixtures thereof. Specific examples of additives include lubricants and mould-release agents such as calcium stearate, zinc stearate, antioxidants such as Irgafos 168™, Irganox 1010™, and Irganox 1076™, slip agents such as erucamide or behenamide, light stabilizers such as tinuvin 622™ and tinuvin 326™, and nucleating agents such as Milliken HPN20E™. These additives may be included in amounts effective to impart the desired properties.

An overview of the additives that can be used in the injection- or compression-moulded articles of the present invention may be found in Plastics Additives Handbook, ed. H. Zweifel, 5th edition, 2001, Hanser Publishers.

### The polylactic acid

As used herein, the terms "polylactic acid" or "polylactide" or "PLA" are used interchangeably and refers to polylactic acid polymers containing repeat units derived from lactic acid. Examples of such grades of PLA are Synbra Technology BV PLLA 1010, NatureWorks ® PLA polymer 3251D, 6201D, 4042D or 4060D and Futerro® PLA.

PLA suitable for the blend can be prepared according to any method known in the state of the art such as the process described in documents WO1998/002480, WO 2010/081887, FR2843390, US5053522, US 5053485 or US5117008.

The PLA can be prepared by ring-opening polymerization of raw materials having required structures selected from lactide, which is a cyclic dimer of lactic acid, glycolide, which is a cyclic dimer of glycolic acid, and caprolactone and the like. Lactide includes L-lactide, which is a cyclic dimer of L-lactic acid, D-lactide, which is a cyclic dimer of D-lactic acid, meso-lactide, which is a cyclic dimer of D-lactic acid and L-lactic acid, and DL-lactide, which is a racemate of D-lactide and L-lactide. The PLA polymers used in the invention can be derived from D-lactic acid, L-lactic acid, or a mixture thereof. A mixture of two or more PLA polymers can be used.

The PLA for use in invention may comprise the product of polymerization reaction of a racemic mixture of L-lactides and D-lactides, also known as poly-DL-lactide (PDLLA). The PLA for use in the present blend may comprise the product of polymerization reaction of mainly D-lactides, also known as poly-D-lactide (PDLA). Preferably, The PLA comprises the product of polymerization reaction of mainly L-lactides (or L,L-lactides), also known as poly-L-lactide (PLLA). Other suitable PLA can be copolymers of PLLA with some D lactic acid units. PLLA-PDLA stereocomplexes can also be used.

The polylactic acid for use may be amorphous PLA, crystalline PLA, or a blend of crystalline and amorphous PLA. A suitable amorphous PLA is for example Nature Works PLA4060D. A suitable semi crystalline PLA is for example Nature Works PLA4042D.

In an embodiment, the polylactic acid may exhibit a crystalline melt temperature (Tc) of from at least 140°C, for example of at least 145°C, for example of at least 150°C, for example of at least 160°C, as determined in accordance with ASTM D3418. In an embodiment, the polylactic acid may exhibit a crystalline melt temperature of at most 190°C, for example of at most 185°C, for example of at most 180°C, for example of at most 170°C, as determined in accordance with ASTM D3418. In an embodiment, the polylactic acid may exhibit a crystalline melt temperature of from 140°C to 190°C, for example from 145°C to 185°C, for example from 150°C to 180°C, for example from 160°C to 170°C, as determined in accordance with ASTM D3418.

In an embodiment, the polylactic acid may exhibit a glass transition temperature of at least 45°C, for example of at least 50°C, for example of at least 50°C, for example of at least 55°C, as determined in accordance with ASTM D3417. In an embodiment, the polylactic acid may exhibit a glass transition temperature of at most 85°C, for example of at most 80°C, for example of at most 70°C, for example of at most 60°C, as determined in accordance with ASTM D3417. In an embodiment, the polylactic acid may exhibit a glass transition temperature of from 45°C to about 85°C, for example from 50°C to 80°C, for example from 50°C to 70°C, for example from 55°C to 60°C, as determined in accordance with ASTM D3417.

In some embodiment, the polylactic acid can have a weight average molecular weight (Mw) ranging between 30.000 and 500.000 g/mol, more preferably between 50.000 and 400.000 g/mol, even more preferably between 70.000 and 300.000 g/mol. The weight average molecular weight can be measured by chromatography by gel permeation compared to a standard polystyrene in chloroform at 30°C. In an embodiment, the ratio of the weight average molecular weight (Mw) to the number average molecular weight (Mn) is generally from 1.0 to 5.0.

### Blending of polylactic acid with polyethylene

The blending of the polylactic acid with the polyethylene can be carried out according to any physical blending method and combinations thereof known in the art. This can be, for instance, dry blending, wet blending or melt blending. The blending conditions depend upon the blending technique and polyethylene involved. Depending on the method, the polyethylene and the polylactic acid can be in any appropriate form, for example, fluff, powder, granulate, pellet, solution, slurry, and/or emulsion.

If dry blending of the polymer is employed, the dry blending conditions may include temperatures from room temperature up to just under the melting temperature of the polymer. The components can be dry blended prior to a melt blending stage, which can take place for example in an extruder.

Melt processing is fast and simple and makes use of standard equipment of the thermoplastics industry. The components can be melt blended in a batch process such as in a Banbury, Haake or Brabender Internal Mixer or in a continuous process, such as in an extruder e.g. a single or twin screw extruder. During melt blending, the temperature at which the polymers are combined in the blender will generally be in the range between the highest melting point of the polymers employed and up to about 80°C above such melting point, preferably between such melting point and up to 30°C above it. The time required for the melt blending can vary broadly and depends on the method of blending employed. The time required is the time sufficient to thoroughly mix the components. Generally, the individual polymers are blended for a time of 10 seconds up to 10 minutes, preferably up to 5 minutes, more preferably up to 2 minutes.

The components can also be wet blended whereby at least one of the components is in solution or slurry form. If solution blending methods are employed, the blending temperature will generally be 25°C to 50°C above the cloud point of the solution involved. The solvent or diluent is then removed by evaporation to leave behind a homogeneous blend of polylactic acid and polyethylene.

The resin composition consists of from 2 % to 50% by weight of polylactic acid based on the total weight of the resin composition and from 50% to 98 % by weight of polyethylene based on the total weight of the resin composition.
Preferably, the resin composition comprises from 5 to 30 wt% of polylactic acid, more preferably from 10 to 20 wt% of polylactic acid. Preferably the resin composition comprises from 70 to 95 wt% of polyethylene, preferably from 80 to 90 wt%.

The resin composition consists of polyethylene and polylactic acid i.e. from 2 to 50 wt% of polylactic acid based on the total weight of the resin composition and from 50 to 98 wt% of polyethylene based on the total weight of the resin composition, preferably from 5 to 30 wt% of polylactic acid and from 70 to 95 wt% of polyethylene, more preferably from 10 to 20 wt% of polylactic acid and from 80 to 90 wt% of polyethylene.

In any case, the weight percentages of the components of said resin composition are required to add up to 100.

The composition does not require compatibiliser for compatibilising polyethylene and polylactic acid i.e. it is free of such compatibilisation agents.

The caps and closures of the present invention are prepared by injection moulding or compression moulding the resin composition as already defined here-above. Preferably, the caps and closures are prepared by injection moulding. Any injection machine known in the art may be used in the present invention, such as for example the ENGEL 125T. All mould types may be used. The caps and closures of the present invention are particularly suitable for closing bottles, in particular bottles for carbonated or still drinks. Advantageously, the resin used in the invention is particularly suitable for single-piece caps and closures, including screw caps.

The injection moulding cycle may be split into three stages: filling, packing-holding, and cooling. During filling, polymer melt is forced into an empty cold cavity; once the cavity is filled; extra material is packed inside the cavity and held under high pressure in order to compensate for density increase during cooling. The cooling stage starts when the cavity gate is sealed by polymer solidification; further temperature decreases and polymer crystallisation takes place during the cooling stage. Typical temperatures for the filling step are of from 160 to 280 °C, preferably of from 180 to 260 °C. Injection-moulding as used herein is performed using methods and equipment well known to the person skilled in the art. An overview of injection moulding and compression moulding is for example given in Injection Moulding Handbook, D.V. Rosato et al., 3rd edition, 2000, Kluwer Academic Publishers.

The moulds used in the production of the present caps and closures may be any mould usually used in the production of caps and closures, such as for example multi-cavity moulds wherein a number of caps and closures is produced simultaneously.

The caps and closures of the present application are not especially limited. They may include screw-caps, caps and closures with a living hinge, glossy caps and closures, transparent caps and closures.

The caps and closures of the present application may be used in various packaging applications, such as for example food packaging, detergent packaging, cosmetic packaging, paint packaging or medical packaging. Examples in food packaging are caps and closures on tubes, bottles, such as for juices, water or milk products. Examples in detergent packaging are caps and closures for washing powders, dish soap, household cleaners. Examples in cosmetic packaging are shower gels, shampoos, oils, cremes, liquid soaps. Examples in medical packaging are packaging for pills, solutions, disinfectants.

Hence, the present application also provides for a packaging comprising the above defined caps and closures.

### Test methods

The density is determined according to ASTM D-1505 at a temperature of 23°C.

The melt index (MI₂), is determined according to ASTM D-1238 at 190°C under a 2.16 kg load.

The molecular weight distribution (MWD) is the ratio of the weight average molecular weight Mw to the number average molecular weight Mn i.e. Mw/Mn. The molecular weights are determined by gel permeation chromatography (GPC) on the pellets of the resin.

Environmental stress crack resistance (ESCR) is determined by the following method:
Caps to be tested are screwed on fresh PET performs and contacted with a surfactant in a heated environment. An internal pressure is applied and monitored. A failure is defined as a drop in pressure that cannot be compensated by the equipment. Standard test conditions for carbonated drinks caps are a surfactant concentration of 10% Igepal CO630, a temperature of 40°C and a pressure of 6 bars.

Organoleptic properties were analyzed according to the following taste test:
5 g of pellets of the resin were put in 1 liter of water for 8 days at 55°C. Resulting water was diluted in a reference water at 0, 33, 50 and 66 wt% and tasted by a trained human panel. When a difference in taste was perceived compared to the reference water, a grade was given according to the table below, and an average value across the panel is reported. The material passes the test if this value is equal to or below 1.5.

**Table 1**

| **% of test water** | **Grade** |
|---|---|
| 100 | 0 |
| 66 | 0,5 |
| 50 | 1 |
| 33 | 2 |

### Examples

In the examples, the following resins were used:
PE1 is a commercially available bimodal polyethylene used for caps and closures produced with a metallocene catalyst in two sequentially connected slurry loop reactors characterized by a density of 0.952 g/cm³, a melt index of 2 g/10min and a MWD of 4.5.
PE2 is a commercially available Ziegler-Natta monomodal polyethylene resin used for caps and closures characterised by density of 0.952 g/cm³, a melt index of 2 g/10min and a MWD of 5.9.
PE3 is a Ziegler-Natta bimodal polyethylene resin characterised by density of 0.954 g/cm³, a melt index of 0.8 g/10min and a MWD of 10.0.

PLA 4060D is a commercially available amorphous poly-L-lactide.

PLA 4042D is a commercially available semi-crystalline poly-L-lactide PE1 and PLA, both in the form of pellets, were extruded at a temperature of 180°C with a screw speed of 500 rpm to produce four different blends. The composition of each blend is provided in Table 2. The blends were prepared without adding a compatibilizing agent.

**Table 2**

| | Blend 1 | Blend 2 | Blend 3 | Blend 4 |
|---|---|---|---|---|
| PE1 | 90% | 95% | 98% | 95% |
| PLA 4042D | 10% | 5% | 2% | |
| PLA 4060D | | | | 5% |

Each blend was injection-moulded on a Netstal Synergy 1000 injection machine equipped with a 4-cavities mould. The cap design was appropriate for carbonated soft drinks and fits on a PCO1810 neck. The processability of the resin composition and the properties of the caps obtained therefrom are provided in Table 3.

**Table 3**

| | **PE1 (comparative)** | | **Blend 1 (invention)** | | **Blend2 (invention)** | | **Blend 3 (invention)** | **Blend 4 (invention)** | **PE2 (comparative)** | **PE3 (comparative)** |
|---|---|---|---|---|---|---|---|---|---|---|
| **Processing** | | | | | | | | | | |
| T injection (°C) | 220 | 170 | 220 | 170 | 220 | 170 | 170 | 170 | 220 | 220 |
| P injection (bar) | 1257 | 1502 | 1046 | 1345 | 1081 | 1344 | 1427 | 1337 | 1490 | 1560 |
| Cycle time (s) | 5,8 | 5,8 | 6,00 | 5,8 | 5,8 | 5,8 | 5,8 | 5,8 | 5.9 | 5.9 |
| Cap weight (g) | 2,6 | 2,6 | 2,6 | 2,6 | 2,6 | 2,6 | 2,6 | 2,6 | 2.6 | 2.6 |

| **Organoleptic properties** | | | | | | | | | | |
|---|---|---|---|---|---|---|---|---|---|---|
| Taste test | Yes | Yes | Yes | Yes | Yes | Yes | Yes | Yes | No | Yes |

| **Stress-cracking resistance on caps** | | | | | | | | | | |
|---|---|---|---|---|---|---|---|---|---|---|
| F50 (hours) | 33,2 | 21,6 | 58,3 | 65,9 | 35,8 | 32,6 | 25,6 | 26,8 | 19,2 | 65 |

It is observed that the use of the PE/PLA resin in the present invention allows reducing the injection pressure compared to other resins processed under the same conditions (i.e. in comparison with pure Ziegler-Natta-catalysed monomodal and bimodal polyethylene and metallocene-catalysed bimodal polyethylene). This reduction in pressure itself induces less wear on the mould, hence extending its lifespan and/or reducing its maintenance frequency.

The caps and closures, according to the present invention are also characterised by an improved ESCR in comparison with pure monomodal Ziegler-Natta catalysed polyethylene and bimodal metallocene-catalysed polyethylene of similar density and melt index (see blends 1 to 4 versus PE1 and PE2).

At a given PLA content in the blend, no effect of the PLA type was noticed on the injection pressure. PE1+5wt% of PLA 4042D (amorphous PLA) or 5wt% of PLA 4060D (semi-crystalline PLA) leads to similar injection pressure, around 1340 bar.

The advantageous organoleptic properties allow the PE/PLA resin to be used for making caps and closures, in particular for closing bottles, such as bottles for carbonated and still drinks.

## Claims

1. Cap or closure made from a resin composition consisting of at least 50 wt% of a polyethylene based on the total weight of the resin composition having a density of at least 0.940 g/cm³ and of at most 0.970 g/cm³ when measured following the ASTM D-1505 method at 23°C and 2 to 50 wt% of polylactic acid based on the total weight of the resin composition.

2. Cap or closure according to claim 1 wherein the polyethylene has a melt index MI₂ of from 1 g/10 min to 10 g/10 min when measured following the ASTM D-1238 method at 190°C under a load of 2.16 kg.

3. Cap or closure according to claim 1 or 2, wherein the polyethylene has a density of at least 0.945 g/cm³ and of at most 0.965 g/cm³.

4. Cap or closure according to claim 3, wherein the polyethylene has a density of at least 0.950 g/cm³ and of at most 0.960 g/cm³.

5. Cap or closure according to any of the preceding claims, wherein the resin composition consists of at least 5 wt% and at most 30 wt% of polylactic acid, based on the total weight of said resin composition.

6. Cap or closure according to claim 5 wherein the resin composition consists of at least 10 wt% and at most 20 wt% of polylactic acid, based on the total weight of said resin composition.

7. A cap or closure as claimed in any preceding claim which is a screw cap.

8. Process for the production of a cap or closure, said process consisting the steps of:
(a) blending at least 50 wt% of a polyethylene, based on the total weight of the blend, having a density of at least 0.940 g/cm³ and of at most 0.970 g/cm³ and 2 to 50 wt% of polylactic acid based on the total weight of the blend,
(b) extruding the blend,
(c) injection moulding or compression moulding the extruded blend into a cap or closure.

9. Use of the cap or closure of claims 1 to 7 in the food or drink industry

10. Use of the cap or closure according to claim 9 for carbonated and still drinks.

11. Use of a resin composition as defined in any one of claims 1 to 6 for the manufacture of a cap or closure by injection moulding or compression moulding.

## Patentansprüche

1. Kappe oder Verschluss, die bzw. der aus einer Harzzusammensetzung hergestellt ist, die auf Basis des Gesamtgewichts der Harzzusammensetzung aus zumindest 50 Gew.-% eines Polyethylens mit einer Dichte von zumindest 0,940 g/cm³ und höchstens 0,970 g/cm³ laut Messung gemäß dem Verfahren nach ASTM D-1505 bei 23 °C und auf Basis des Gesamtgewichts der Harzzusammensetzung aus 2 bis 50 Gew.-% Polymilchsäure besteht.

2. Kappe oder Verschluss nach Anspruch 1, wobei das Polyethylen laut Messung gemäß dem Verfahren nach ASTM D-1238 bei 190 °C unter einer Last von 2,16 kg einen Schmelzindex MI₂ von 1 g/10 min bis 10 g/10 min aufweist.

3. Kappe oder Verschluss nach Anspruch 1 oder 2, wobei das Polyethylen eine Dichte von zumindest 0,945 g/cm³ und höchstens 0,965 g/cm³ aufweist.

4. Kappe oder Verschluss nach Anspruch 3, wobei das Polyethylen eine Dichte von zumindest 0,950 g/cm³ und höchstens 0,960 g/cm³ aufweist.

5. Kappe oder Verschluss nach einem der vorstehenden Ansprüche, wobei die Harzzusammensetzung auf Basis des Gesamtgewichts der Harzzusammensetzung aus zumindest 5 Gew.-% und höchstens 30 Gew.-% Polymilchsäure besteht.

6. Kappe oder Verschluss nach Anspruch 5, wobei die Harzzusammensetzung auf Basis des Gesamtgewichts der Harzzusammensetzung aus zumindest 10 Gew.-% und höchstens 20 Gew.-% Polymilchsäure besteht.

7. Kappe oder Verschluss nach einem vorstehenden Anspruch, wobei es sich um eine Schraubkappe handelt.

8. Verfahren zum Herstellen einer Kappe oder eines Verschlusses, wobei das Verfahren aus den Schritten besteht:
(a) Vermengen von auf Basis des Gesamtgewichts der Vermengung zumindest 50 Gew.-% eines Polyethylens mit einer Dichte von zumindest 0,940 g/cm³ und höchstens 0,970 g/cm³ und auf Basis des Gesamtgewichts der Vermengung 2 bis 50 Gew.-% Polymilchsäure,
(b) Extrudieren der Vermengung,
(c) Spritzgießen oder Formpressen der extrudierten Vermengung in eine Kappe oder einen Verschluss.

9. Verwendung der Kappe oder des Verschlusses nach den Ansprüchen 1 bis 7 in der Lebensmittel- oder Getränkeindustrie.

10. Verwendung der Kappe oder des Verschlusses nach Anspruch 9 für mit Kohlensäure versetzte und stille Getränke.

11. Verwendung einer Harzzusammensetzung nach einem der Ansprüche 1 bis 6 zur Herstellung einer Kappe oder eines Verschlusses durch Spritzgießen oder Formpressen.

## Revendications

1. Bouchon ou fermeture fait à partir d'une composition de résine constituée d'au moins 50 % en poids, par rapport au poids total de la composition de résine, d'un polyéthylène ayant une masse volumique, mesurée suivant la méthode ASTM D-1505 à 23°C, d'au moins 0,940 g/cm³ et d'au plus 0,970 g/cm³, et de 2 à 50 % en poids, par rapport au poids total de la composition de résine, de poly(acide lactique).

2. Bouchon ou fermeture selon la revendication 1, dans lequel le polyéthylène a un indice de fluage MI₂, mesuré suivant la méthode ASTM D-1238 à 190°C sous une charge de 2,16 kg, de 1 g/10 min à 10 g/10 min.

3. Bouchon ou fermeture selon la revendication 1 ou 2, dans lequel le polyéthylène a une masse volumique d'au moins 0,945 g/cm³ et d'au plus 0,965 g/cm³.

4. Bouchon ou fermeture selon la revendication 3, dans lequel le polyéthylène a une masse volumique d'au moins 0,950 g/cm³ et d'au plus 0,960 g/cm³.

5. Bouchon ou fermeture selon l'une quelconque des revendications précédentes, dans lequel la composition de résine est constituée d'au moins 5 % en poids et d'au plus 30 % en poids, par rapport au poids total de ladite composition de résine, de poly(acide lactique).

6. Bouchon ou fermeture selon la revendication 5, dans lequel la composition de résine est constituée d'au moins 10 % en poids et d'au plus 20 en poids, par rapport au poids total de ladite composition de résine, de poly(acide lactique).

7. Bouchon ou fermeture selon l'une quelconque des revendications précédentes, qui est un bouchon à vis.

8. Procédé pour la production d'un bouchon ou fermeture, ledit procédé consistant en les étapes de :
(a) mélange d'au moins 50 % en poids, par rapport au poids total du mélange, d'un polyéthylène ayant une masse volumique d'au moins 0,940 g/cm³ et d'au plus 0,970 g/cm³, et de 2 à 50 % en poids, par rapport au poids total du mélange, de poly(acide lactique),
(b) extrusion du mélange,
(c) moulage par injection ou moulage par compression du mélange extrudé en un bouchon ou fermeture.

9. Utilisation du bouchon ou fermeture des revendications 1 à 7 dans l'industrie alimentaire ou des boissons.

10. Utilisation du bouchon ou fermeture selon la revendication 9 pour des boissons gazeuses et plates.

11. Utilisation d'une composition de résine telle que définie dans l'une quelconque des revendications 1 à 6 pour la fabrication d'un bouchon ou fermeture par moulage par injection ou moulage par compression.
